# EUROPEAN PATENT APPLICATION

(11) **EP 3 258 596 A1**
(43) Date of publication of application: **20.12.2017**
(21) Application number: 16174799.3
(22) Date of filing: 16.06.2016
(51) Int. Cl.: H02S 40/44, F16B 11/00

(54) **PHOTOVOLTAIC THERMAL PLANT**

(71) Applicant: Morgonsol Väst AB, 435 44 Mölnlycke (SE)
(72) Inventor: KARLSSON, Leif, 517 97 Bollebygd (SE)
(74) Representative: Awapatent AB

(57) **Abstract**

The present invention relates to a photovoltaic thermal plant (1) arranged for producing electricity and/or heat comprising at least two photovoltaic thermal modules (220), each photovoltaic thermal module (220) comprising a solar cell panel (222), a thermal absorber (224) and a sealing element (226), wherein said solar cell panel (222) and said thermal absorber (224) are arranged adjacent to and facing each other and wherein said sealing element (226) is arranged to encircle a space (242) between said solar cell panel (222) and said thermal absorber (224). The photovoltaic thermal plant (1) further comprises a pumping arrangement (30), in communication with the respective space (242) of each photovoltaic thermal module (220), wherein said pumping arrangement (30) is arranged for establishing and maintaining a negative pressure in said respective space (242) and thereby increasing the area of physical contact between said solar cell panel (222) and said thermal absorber (224), which negative pressure is maintained at least during operation of said photovoltaic thermal module (220). Moreover, the present invention relates to a method for a photovoltaic thermal plant and a kit of parts intended for a photovoltaic thermal plant.

## Description

### Technical field of the Invention

The present invention relates to a photovoltaic thermal plant arranged for producing electricity and/or heat, as well as a method for a photovoltaic thermal plant and a kit of parts intended for a photovoltaic thermal plant.

### Background and Summary of the Invention

The sun provides the surface of the earth with more energy every day than we globally can use during a year. It is also a sustainable energy source and therefore it is a good alternative to fossil fuels. Hence, we need to find ways for utilizing the energy from the sun more efficiently.

Photovoltaic thermal plants comprise photovoltaic thermal modules which are used for converting the radiation from the sun into both electricity and/or heat. Such a module comprises both a solar cell and a thermal absorber. The solar cell convert sun radiation into electricity and the thermal absorber will absorb some or all of the radiation that is not used by the solar cell, and this absorbed radiation can be used for heating e.g. water. Hence, there will be less waste radiation. In other words, a photovoltaic thermal module will convert the energy from the sun more efficiently than a solar cell or a thermal absorber would have made alone.

To ensure a good efficiency of a photovoltaic thermal module the area where the solar cell is in physical contact with the thermal absorber is as large as possible in order to ensure good thermal transfer. A problem with the current state of the art is that the solar cell and the thermal absorber in the photovoltaic thermal plant are connected to each other with the use of an adhesive. This adhesive gradually degrades and the contact area between the solar cell and the thermal absorber becomes smaller, i.e. the area where the solar cell is in physical contact with the thermal absorber is decreased. This means that the thermal transfer between the solar cell and the thermal absorber will decrease and hence the overall efficiency of the photovoltaic thermal module for converting the radiation from the sun into to electricity and/or heat.

There is thus a need for improving the current state of the art and provide a photovoltaic thermal plant which solves or at least alleviates these problems.

It is an object of the present invention to improve the current state of the art and to at least alleviate the above problems, and to provide an improved photovoltaic thermal plant. These and other objects are achieved by a photovoltaic thermal plant arranged for producing electricity and/or heat, as well as a method for a photovoltaic thermal plant and a kit of parts intended for a photovoltaic thermal plant.

According to a first aspect of the invention a photovoltaic thermal plant arranged for producing electricity and/or heat is provided. The photovoltaic thermal plant comprises
at least two photovoltaic thermal modules, each photovoltaic thermal module comprising a solar cell panel, a thermal absorber and sealing element, wherein said solar cell panel and said thermal absorber are arranged adjacent to and facing each other and wherein said sealing element is arranged to encircle a space between said solar cell panel and said thermal absorber;
wherein said photovoltaic thermal plant further comprises a pumping arrangement, in communication with the respective space of each photovoltaic thermal module, wherein said pumping arrangement is arranged for establishing and maintaining a negative pressure in said respective space and thereby increasing the area of physical contact between said solar cell panel and said thermal absorber, which negative pressure is maintained at least during operation of said photovoltaic thermal module.

The present invention is based on the realization that the pumping arrangement establishes and maintains a negative pressure in the space between the solar cell panel and the thermal absorber and thereby increasing the area of physical contact between the solar cell panel and the thermal absorber. An increased physical contact will increase the thermal transfer between the solar cell panel and the thermal absorber and thereby may the efficiency of the photovoltaic thermal plant increase. By the use of a pumping arrangement for providing this increased area of physical contact between the solar cell panel and the thermal absorber there is no need for using other adhesives, which adhesive will gradually degrade which will give a decreased overall efficiency of the photovoltaic thermal plant.

According to at least one example embodiment the solar cell panel is used for converting the sun light into electricity. The solar cell panel can be built up of one or more solar cells of various types of solar cells of which the active layer will differ. For example the solar cells can be silicon based solar cell, where the active layer may be made from crystalline silicon. The active layer of the silicon based solar cell may also be made from amorphous silicon. Moreover, the solar cells may be solar cells where the active layer comprises other materials than silicon, such as various thin film solar cells, e.g. dye sensitized solar cell or organic solar cells.

It should be understood that the solar cell panel is a complete solar cell panel comprising the necessary equipment for carrying out the function of a solar cell panel, e.g. an active layer for light absorption, electrodes and connections. According to at least one example embodiment of the invention the solar cell panel has the form of a plate.

According to at least one example embodiment of the invention the thermal absorber converts at least a part or all of the remaining radiation from the sun to heat. Remaining radiation is the radiation which has not been absorbed in the solar cell panel for electricity production. The thermal absorber may be made out of a plastic material, for example it can be made from a thermoplastic material such as for example polyethylene.

It should be understood that the thermal absorber is a complete thermal absorber comprising the necessary equipment for carrying out the function of a thermal absorber, e.g. an active layer for absorbing heat and means for connecting a pipe or tube for a fluid to which the heat is transferred. The fluid may for example be water. According to at least one example embodiment of the invention the thermal absorber has the form of a plate.

According to at least one example embodiment of the invention the sealing element encircles the space between the solar cell panel and the thermal absorber. In relation to this invention, the term encircle means that the sealing element may follow the outer contour of the solar cell panel and/or the thermal absorber. According to at least one example embodiment of the invention the sealing element is arranged of a flexible material allowing the sealing element to follow the contours of the solar cell panel and/or the thermal absorber. The flexible material may for example be a rubber material, e.g. a synthetic rubber. According to at least one embodiment of the invention the sealing element is e.g. an o-ring or a rubber packing.

According to at least one example embodiment of the invention the sealing element is arranged on top of the thermal absorber and the solar cell panel is arranged on top the sealing element.

According to at least one example embodiment of the invention the solar cell panel may be arranged on top of the thermal absorber and the sealing element will be arranged around the solar cell panel and thermal absorber such that it covers the gap formed between the solar cell panel and the thermal absorber.

According to at least one example embodiment of the invention a pumping arrangement, in communication with the respective space of each photovoltaic thermal module is in fluid communication with the respective space of each photovoltaic module.

According to at least one example embodiment of the invention said pump arrangement comprises at least one pump and at least one conduit, wherein said at least one conduit connects said at least one pump to said respective spaces, preferably via an opening in said thermal absorber; and
wherein said at least one pump is connected to all at least two photovoltaic thermal modules.

According to at least one example embodiment of the invention the pump arrangement is connected to between 2 photovoltaic thermal modules to 500 photovoltaic thermal modules, or between 5 photovoltaic thermal modules to 200 photovoltaic thermal modules. The pump arrangement may be connect to at least 2 photovoltaic thermal modules, or at least 5 photovoltaic thermal modules, or at least 10 photovoltaic thermal modules.

According to at least one example embodiment of the invention the pump arrangement comprises between 1 pump to 20 pumps, or between 2 pumps the 10, or between 3 pumps to 5 pumps. In other words, the pumps arrangement may comprise at least 1 pump, or at least 2 pumps, or at least 5 pumps.

According to at least one example embodiment of the invention the at least one conduit is connected to the thermal absorber or thermal absorber plate by conventional means at the opening in thermal absorber.

According to at least one example embodiment of the invention said pump induces a negative pressure between said solar cell panel and said thermal absorber,
wherein said negative pressure is between 1-99 % of the atmospheric pressure, or 20-80 % of the atmospheric pressure, or 30-70 % of the atmospheric pressur.

According to at least one example embodiment of the invention the negative pressure is at least 90 % of the atmospheric pressure, or at least 70 % of the atmospheric pressure, or at least 50 % of the atmospheric pressure, or at least 40 % of the atmospheric pressure, or at least 30 % of the atmospheric pressure. It shall be understood that the lower the percentage of the atmospheric pressure, the lower is the negative pressure. A low negative pressure will increase the area of physical contact between said solar cell panel and said thermal absorber and hence, the thermal transfer between the solar cell panel and the thermal absorber is better.

According to at least one example embodiment of the invention, the photovoltaic thermal plant further comprising a sensor for monitoring the negative pressure induced by said pump.

According to at least one example embodiment of the invention there is one sensor per photovoltaic thermal module that monitors the negative pressure at the respective photovoltaic thermal module. It should be understood that a change in the monitored negative pressure could be an indication of a leakage in the pump arrangement. A leakage in the pump arrangement might decrease the area of physical contact between said solar cell panel and said thermal absorber and hence the thermal transfer between the solar cell and the thermal absorber may be decreased.

According to at least one example embodiment of the invention there is one sensor per check valve monitoring the negative pressure at said check valve. According to at least one example embodiment of the invention the check valves may be connected to several photovoltaic thermal modules. In should be understood that the sensor then is monitoring the negative pressure for the several photovoltaic thermal modules.

According to at least one example embodiment of the invention a section of the pump arrangement where a leakage has occurred can be isolated in order to ensure the negative pressure in the rest of the photovoltaic plant.

According to at least one example embodiment of the invention a person can listen for leakage instead of or as a complement to using a sensor for monitoring the negative pressure.

According to at least one example embodiment of the invention said solar cell panel has an active area in the range of 0.5 m² to 4 m², or 1 m² to 3 m²; and said thermal absorber has an active area in the range of 0.5 m² to 4 m², or 1 m² to 3 m².

According to at least one example embodiment of the invention the active area the solar cell panel and the thermal absorber respectively corresponds to the output from each of the solar cell panel and the thermal absorber respectively. A larger active area may result in a higher output.

According to at least one example embodiment of the invention the active area of the solar cell panel and the thermal absorber may be the same. According to at least one example embodiment of the invention the area of the solar cell panel and the thermal absorber will differ from each other.

According to at least one example embodiment of the invention said at least two photovoltaic thermal module comprises between 2 modules and 500 modules, or between 20 modules and 300 modules, or between 100 modules and 200 modules.

According to at least one example embodiment of the invention the photovoltaic thermal plant may comprise at least 2 module, or at least 5 modules, or at least 10 modules, or at least 50 modules.

According to at least one example embodiment of the invention said modules can be connected in parallell and/or in series to said pump.

According to at least one example embodiment of the invention the modules can be connected in parallel to the pump. When the modules are connected in parallel to the pump, there is only one connection point, e.g. an opening the thermal absorber, of each module.

According to at least one example embodiment of the invention the modules may be connected in series to the pump. When the modules are connected in series to the pump, one or several of the modules comprises at least two connection points, e.g. an opening the thermal absorber. Via the two and or more connection points the conduit will connect one or several modules to the pump via each other.

According to at least one example embodiment of the invention the modules of the photovoltaic thermal plant may be connected in parallel to the pump whereas other modules at the same time may be connected in series to the pump. In other words, the photovoltaic thermal plant may comprise module both connected in series and in parallel to the pump.

According to a second aspect of the invention a method for a photovoltaic thermal plant is provided. The method for a photovoltaic thermal plant comprising at least two photovoltaic thermal modules, each photovoltaic thermal module comprising a solar cell panel and a thermal absorber arranged adjacent to and facing each other, said photovoltaic thermal plant further comprises a pumping means
wherein said method comprises
running, at least during operation of said photovoltaic thermal module, said pumping arrangement in order to establish and maintain a negative pressure in said respective photovoltaic thermal module and thereby increasing the area of physical contact between said solar cell panel and said thermal absorber.

Effects and features of this second aspect of the present invention are largely analogous to those described above in connection with the first aspect of the inventive concept. Embodiments mentioned in relation to the first aspect of the present invention are largely compatible with the second aspect of the invention.

According to at least one example embodiment of the invention the pump is continuously running in order to establish and maintain a negative pressure.

According to at least one example embodiment of the invention the pump will automatically start and stop periodically in order to maintain the negative pressure. In other words, the pump will not run continuously during operation but still establish and maintain a negative pressure.

According to at least one example embodiment of the invention said method further comprises using a sensor for monitoring a negative pressure induced by said continuously working pump arrangement.

According to at least one example embodiment of the invention the senor monitoring the negative pressure can be use for deciding the length of periods of which the pump will be running.

According to a third aspect of the invention a kit of parts intended for installation at a photovoltaic thermal plant is provided. The kit of parts intended for installation at a photovoltaic plant comprising:
- at least two photovoltaic thermal modules, each photovoltaic thermal module comprising a solar cell panel a thermal absorber, and sealing element for encircling a space between said solar cell panel and said thermal absorber,
- pumping means adapted to be connected to said space for establishing and maintaining a negative pressure in said respective photovoltaic thermal module and thereby increasing the area of physical contact between said solar cell panel and said thermal absorber, which negative pressure is maintained at least during operation of said photovoltaic thermal module.

Effects and features of this third aspect of the present invention are largely analogous to those described above in connection with the first and second aspects of the inventive concept. Embodiments mentioned in relation to the first and second aspects of the present invention are largely compatible with the third aspect of the invention.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a schematic view of a photovoltaic thermal plant in accordance with at least one embodiment of the invention;
Fig. 2a is a cross-sectional view of a photovoltaic thermal module in accordance with at least one embodiment of the invention;
Fig. 2b is a cross-sectional view of a photovoltaic thermal module in accordance with at least one embodiment of the invention;
Fig. 3a is a top view of a thermal absorber in accordance with at least one embodiment of the invention;
Fig. 3b is a top view of a thermal absorber in accordance with at least one embodiment of the invention;
Fig. 3c is a top view of a thermal absorber in accordance with at least one embodiment of the invention

### Detailed description of the drawings

In the present detailed description, embodiments of the present invention will be discussed with the accompanying figures. It should be noted that this by no means limits the scope of the invention, which is also applicable in other circumstances for instance with other types or variants of photovoltaic thermal modules than the embodiments shown in the appended drawings. Further, that specific features are mentioned in connection to an embodiment of the invention does not mean that those components cannot be used to an advantage together with other embodiments of the invention.

In essence, in at least two separate photovoltaic thermal modules a solar cell panel is attached to a thermal absorber by use of a common pump. The pump removes at least a portion of the gas which was present between the solar cell panel and the thermal absorber before the pump was started and thereby increases the area of physical contact between the solar cell panel and the thermal absorber.

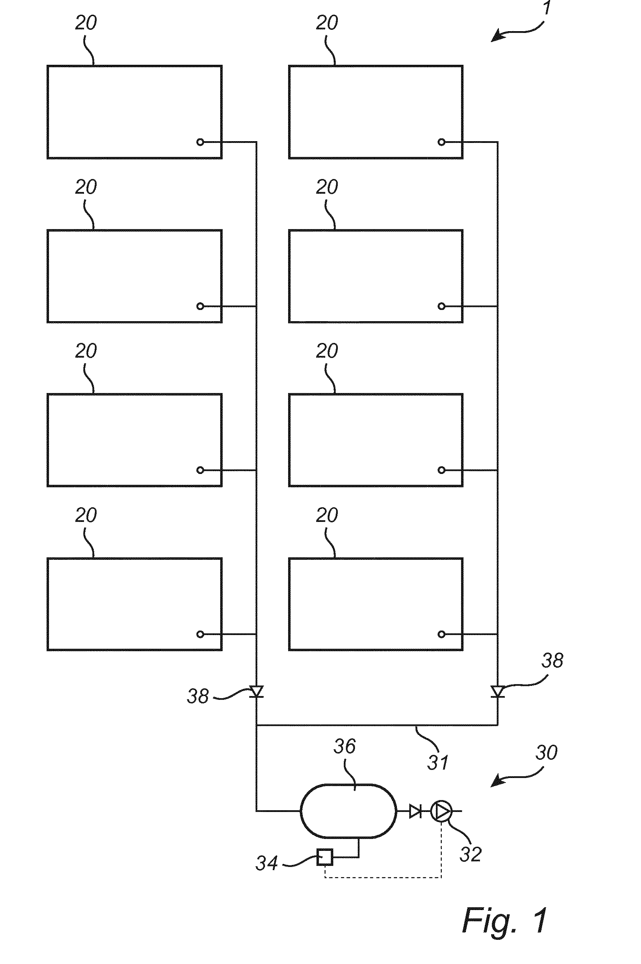

Fig. 1 shows a photovoltaic thermal plant 1 arranged for producing electricity and/or heat. The photovoltaic thermal plant comprises at least two photovoltaic thermal modules 20, shown in the figure are eight photovoltaic thermal modules 20. Each photovoltaic thermal module 20 comprises a solar cell panel, a thermal absorber and sealing element. The solar cell panel and the thermal absorber are arranged adjacent to and facing each other and the sealing element is arranged to encircle a space between the solar cell panel and the thermal absorber.

Moreover, the photovoltaic thermal plant 1 further comprises a pumping arrangement 30, in communication with the respective space of each photovoltaic thermal module 20.

The pumping arrangement 30 may comprise a pump 32, a control unit 34, a vacuum tank 36, at least one check valve 38 (here three check valves 38) and at least one conduit 31 for connecting the pump 32 to each photovoltaic thermal module 20.

The pumping arrangement 30 is arranged for establishing and maintaining a negative pressure in the respective space and thereby increasing the area of physical contact between the solar cell panel and the thermal absorber. The negative pressure is maintained at least during operation of said photovoltaic thermal module 20. The pumping arrangement 30 is arranged so that the at least one conduit 31 connects the pump to said respective spaces, preferably via an opening in said thermal absorber. The photovoltaic thermal modules 20 are connected in parallel to the pumping arrangement 30. The pumping arrangement 30 is connected to the photovoltaic thermal modules 20 such that the pump 32 is connected to the photovoltaic thermal modules 20 via the vacuum tank 36 and the check valves 38. The control unit 34 is arranged such that it can be used for communication between said vacuum tank 36 and the pump 32.

During operation, each photovoltaic thermal module 20 is configured to convert solar light into electricity via the solar cell panel and to use the heat radiation from the sun to heat .e.g. water flowing underneath each photovoltaic module.

Further, during operation the pump 32 is working in order to establish and maintain a negative pressure in the respective space and thereby increasing the area of physical contact between the solar cell panel and the thermal absorber in each photovoltaic thermal module 20. The negative pressure is between 1-99 % of atmospheric pressure. The lower the pressure that is induced by the pump 32, the larger area of the solar cell panel and the thermal absorber is in physical contact with each other.

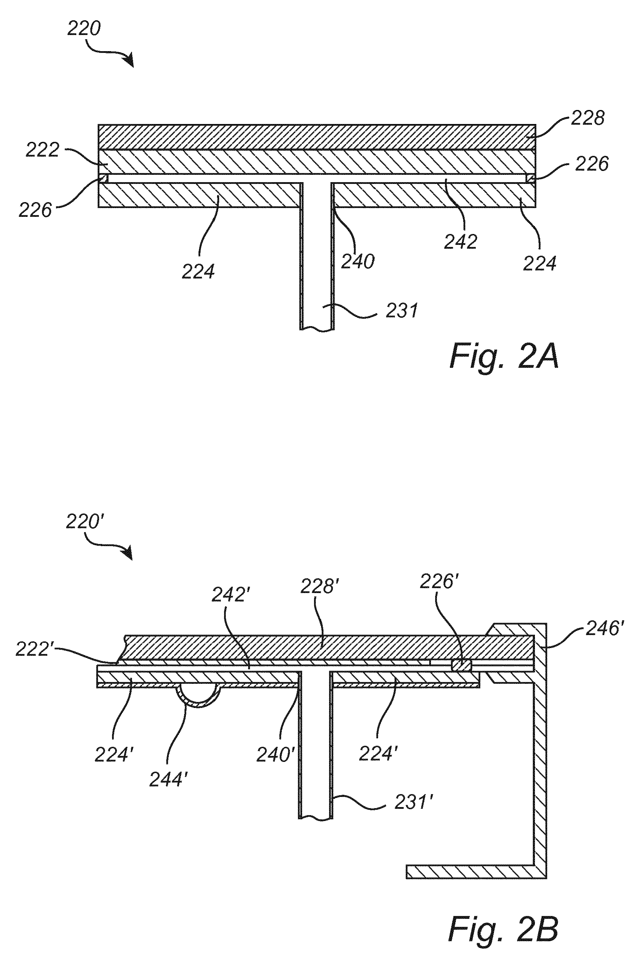

Fig. 2a shows a cross-sectional view of a photovoltaic thermal module 220 not drawn to scale. The photovoltaic thermal module 220 comprises a solar cell panel 222, a thermal absorber 224 and sealing element 226. The solar cell panel 222 and the thermal absorber 224 have a respective active area in the size range of 1 m² to 3 m². Moreover, the photovoltaic thermal module 220 comprises a protecting glass 228.

The thermal absorber comprises an opening 240. Via the opening 240 the photovoltaic thermal module 222 is in fluid connection with to the pump arrangement via a conduit 231.

The solar cell panel 222 and the thermal absorber 224 are arranged adjacent to and facing each other and the sealing element 226 is arranged to encircle a space 242 between the solar cell panel 222 and the thermal absorber 224. The space is normaly airfilled, which air is then partly evacuated by the pump.The protecting glass 228 is arranged to protect the solar cell panel 222.

Fig. 2b shows a cross-sectional view of a photovoltaic thermal module 220', not drawn to scale. The photovoltaic thermal module 220' comprises a solar cell panel 222', a thermal absorber 224' and sealing element 226'. Moreover, the photovoltaic thermal module 220' comprises a protecting glass 228'. Further, the photovoltaic thermal module 220' comprises means 244' for attaching pipes for water, which is to be heated. There is also a metal frame 246'.

The thermal absorber comprises an opening 240'. Via the opening 240' the photovoltaic thermal module 222' is connected to the pump arrangement via a conduit 231'.

The solar cell panel 222' and the thermal absorber 224' are arranged adjacent to and facing each other and the sealing element 226' is arranged to encircle a space 242' between the solar cell panel 222' and the thermal absorber 224'. The protecting glass 228' is arranged to protect the solar cell panel 222'.The means 244' for holding water pipes is arranged underneath the thermal absorber 224'. The metal frame is arranged for holding the photovoltaic thermal module 222'.

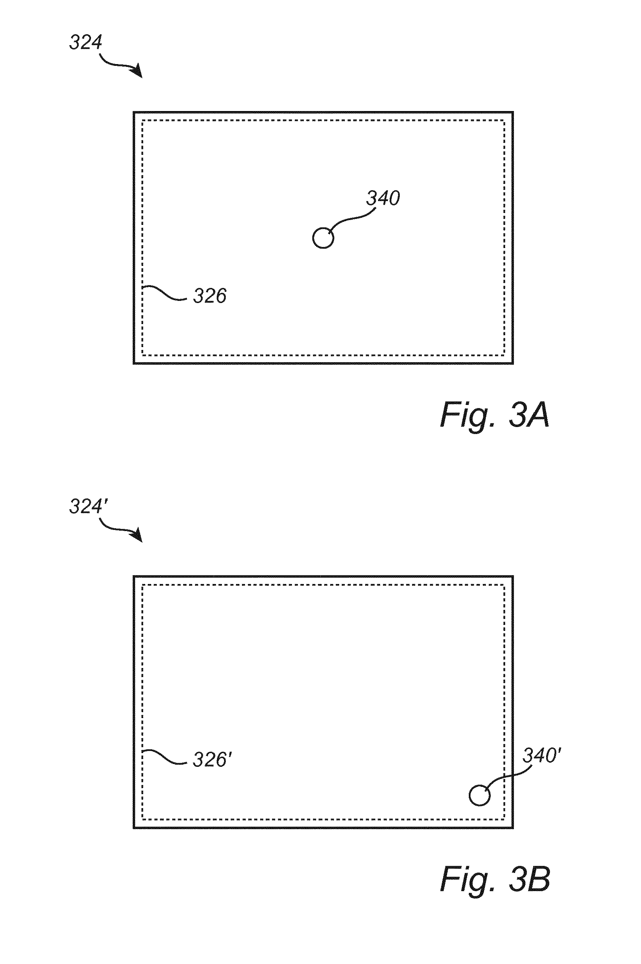

Fig. 3a shows a top view of a thermal absorber 324. The thermal absorber 324 comprises an opening 340. Moreover, a sealing element 326 is arranged on top of the thermal absorber 324. The thermal absorber 324 has a rectangular shape. The shape of the sealing element 326 encircles the thermal absorber and follows the contour of the thermal absorber 324. The thermal absorber 324 is made from a plastic material. For example, the thermal absorber 324 can be made from a thermoplastic, e.g. polyethylene. The opening 340 has a circular form and is placed in the middle of the thermal absorber 324.

Fig. 3b shows a top view of a thermal absorber 324', which is arranged as described in relation to Figure 3a, except that the opening 340' is placed in a corner of the thermal absorber 324'.

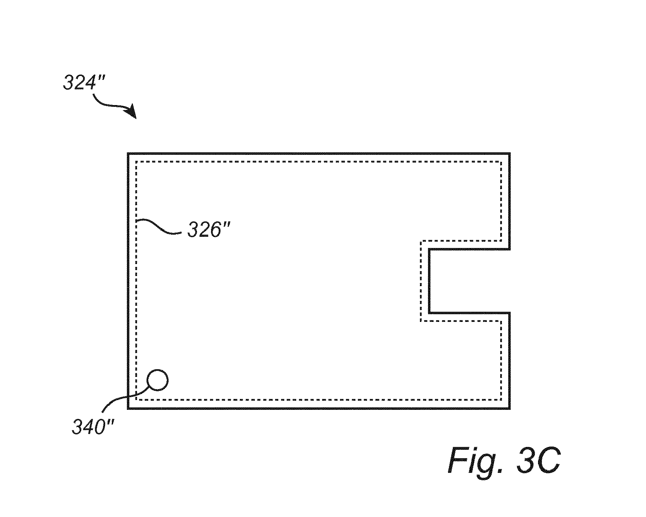

Fig. 3c shows a top view of a thermal absorber 324", which is arranged as described in relation to Figure 3b, except that the thermal absorber 324' has a shape which is not a rectangular shape in order to facilitate the mounting o the photovoltaic thermal module.

The skilled person realizes that a number of modifications of the embodiments described herein are possible without departing from the scope of the invention, which is defined in the appended claims.

For instance, the shape of the solar cell panel and the thermal absorber can be e.g. circular, or pentagonal, or any irregular shape, Further, the shape of the opening in the thermal absorber do not have to be circular, it may e.g. be rectangular, or pentagonal, or any irregular shape. Moreover, the photovoltaic thermal modules can be used for heating other substances than water.

## Claims

1. A photovoltaic thermal plant arranged for producing electricity and/or heat comprising
at least two photovoltaic thermal modules, each photovoltaic thermal module comprising a solar cell panel, a thermal absorber and sealing element, wherein said solar cell panel and said thermal absorber are arranged adjacent to and facing each other and wherein said sealing element is arranged to encircle a space between said solar cell panel and said thermal absorber;
wherein said photovoltaic thermal plant further comprises a pumping arrangement, in communication with the respective space of each photovoltaic thermal module, wherein said pumping arrangement is arranged for establishing and maintaining a negative pressure in said respective space and thereby increasing the area of physical contact between said solar cell panel and said thermal absorber, which negative pressure is maintained at least during operation of said photovoltaic thermal module.

2. A photovoltaic thermal plant according to claim 1 wherein said pump arrangement comprises at least one pump and at least one conduit, wherein said at least one conduit connects said at least one pump to said respective spaces, preferably via an opening in said thermal absorber; and
wherein said at least one pump is connected to all at least two photovoltaic thermal modules.

3. A photovoltaic thermal plant according to any of preceding claims wherein said pump induces a negative pressure between said solar cell panel and said thermal absorber,
wherein said negative pressure is between 1-99 % of the atmospheric pressure, or 20-80 % of the atmospheric pressure, or 30-70 % of the atmospheric pressure.

4. A photovoltaic thermal plant according to any of preceding claims further comprising a sensor for monitoring the negative pressure induced by said pump.

5. A photovoltaic thermal plant according to any of preceding claims
wherein said solar cell panel has an active area in the range of 1 m² to 3 m²; and
wherein said thermal absorber has an active area in the range of 1 m² to 3 m²_{.}

6. A photovoltaic thermal plant according any of preceding claims wherein said at least two photovoltaic thermal module comprises between 2 modules and 500 modules, or between 20 modules and 300 modules, or between 100 modules and 200 modules.

7. A photovoltaic thermal plant according to any of preceding claims wherein said modules can be connected in parallell and/or in series to said pump.

8. A method for a photovoltaic thermal plant comprising at least two photovoltaic thermal modules, each photovoltaic thermal module comprising a solar cell panel and a thermal absorber arranged adjacent to and facing each other, said photovoltaic thermal plant further comprises a pumping arrangement
wherein said method comprises
running, at least during operation of said photovoltaic thermal module, said pumping means in order to establish and maintain a negative pressure in said respective photovoltaic thermal module and thereby increasing the area of physical contact between said solar cell panel and said thermal absorber.

9. A method for a photovoltaic thermal plant according to claim 9 wherein said method further comprises the use of a sensor for monitoring a negative pressure induced by said continuously working pump arrangement.

10. A kit of parts intended for installation at a photovoltaic thermal plant, comprising:
- at least two photovoltaic thermal modules, each photovoltaic thermal module comprising a solar cell panel a thermal absorber, and sealing element for encircling a space between said solar cell panel and said thermal absorber,
- pumping means adapted to be connected to said space for establishing and maintaining a negative pressure in said respective photovoltaic thermal module and thereby increasing the area of physical contact between said solar cell panel and said thermal absorber, which negative pressure is maintained at least during operation of said photovoltaic thermal module.
